Europäisches Patentamt

European Patent Office

Office européen des brevets

(19)

(11) Publication number: **0 236 546**
**A2**

## (12) EUROPEAN PATENT APPLICATION

(21) Application number: 86113347.8

(22) Date of filing: 29.09.86

(51) Int. Cl.⁴: **F16C 1/10**

(30) Priority: **14.03.86 IT 5313386 U**

(43) Date of publication of application:
**16.09.87 Bulletin 87/38**

(84) Designated Contracting States:
**DE FR GB SE**

(71) Applicant: **FIAT AUTO S.p.A.**
**Corso Giovanni Agnelli 200**
**I-10135 Torino(IT)**

(72) Inventor: **Di Giusto, Nevio**
**Via Guarini, 48**
**I-10078 Venaria(IT)**

(74) Representative: **Bongiovanni, Guido et al**
**c/o Ingg. Carlo e Mario Torta Via Viotti 9**
**I-10121 Torino(IT)**

(54) **A flexible transmission device, particularly for control devices.**

(57) A flexible device described of the type in which
two terminals provided with external connector ele-
ments are connected together hydraulically by a
flexible tube filled with an incompressible fluid op-
erable to cause displacement of movable walls of
respective chambers of variable volume of the termi-
nals, to which the connector elements are fixed;
within the tube there is disposed a Bowden mecha-
nism immersed in the fluid and mechanically conec-
ting the said external connector elements.

EP 0 236 546 A2

# A FLEXIBLE TRANSMISSION DEVICE, PARTICULARLY FOR CONTROL DEVICES

The present invention relates to a flexible transmission device, particularly adapted for control devices of the type operable to transmit, to a mechanical element, a translation movement the direction of which is determined by the application to the opposite end of the flexible device of a traction or a thrust.

Different types of flexible transmission devices are known, which are used for transmitting remote mechanical controls, for example, to actuate the gear box of a motor vehicle; the most common type of flexible transmission device makes use of a Bowden mechanism housed within a suitable flexible sheath of fabric or plastics and including a flexible connector fixed at one end to the control member and at the opposite end to the member to be actuated; the Bowden mechanism has, however, the disadvantage of being unsuitable for working in compression; therefore, if it is required to make the controlled member perform movements in two opposite directions it is necessary to employ a pair of Bowden mechanisms linked by rocker levers, but these have a significant size, a risk of the cables sticking and a not insignificant cost.

Flexible transmission mechanisms of hydraulic type are also known, these substantially comprising a tube filled with liquid and closed in a fluid-tight manner at the opposite ends by movable pistons; such mechanisms also have, however, the disadvantage of being capable of transmitting movements in only a single direction and thus do not have substantial advantages with respect to conventional Bowden mechanisms.

The object of the invention is to provide a flexible transmission device able to control translation movements in different directions, which will be of relatively low cost, small size, and high reliability.

The said object is achieved by the invention in that it relates to a flexible transmission device, particularly for control devices, of the type comprising a pair of terminals each of which defines within its interior a chamber of variable volume closed in a fluid-tight manner by a movable wall rigidly connected to an external connector member, a flexible tube closed in a fluid-tight manner at its opposite ends by the said terminals and hydraulically connecting the said variable volume chambers thereof, and a substantially incompressible fluid sealed within the volume defined by the said chambers and the interior of the said tube, characterised in that it further includes a Bowden mechanism housed within the said tube and mechanically connecting the said external connector elements of the said pair of terminals.

For a better understanding of the invention there is now given a non-limitative description of one embodiment thereof with reference to the attached drawings which illustrate a side view in elevation, sectioned at the ends, of a flexible device formed according to the invention.

With reference to the said drawing, a flexible transmission device is generally indicated with the reference numeral 1 and is able to transmit axial translation movements in either direction between any known type of control device, not illustrated for simplicity, for example, a lever or the control column of a motor vehicle gear box, and any type of device which can be controlled by the control device, for example, a lock or a movable member of the vehicle gear box, also known and not illustrated for simplicity; the device 1 includes a pair of terminals 2 and 3 which are identical with one another, each of which defines within its interior a chamber 4 of variable volume closed in a fluid-tight manner by a movable end wall 5 rigidly connected to an associated outer connector element 8, a flexible tube 9 closed in a fluid-tight manner at its opposite ends 12 and 13 by the terminals 2 and 3 and hydraulically connecting the chambers 4 thereof, and a substantially incompressible fluid 14, for example an oil of the PARAFLU (Registered Trade Mark) type sealed within the volume defined by the pair of chambers 4 and the interior of the tube 9, which latter is preferably made of rubber or plastics material. The tube 9 preferably has a relatively great wall thickness so that it has a relatively low circumferential deformability, and its ends 12 and 13 are fitted in a fluid-tight manner to respective attachment nipples 15 of the terminals 2 and 3, which are preferably retained by means of bands 16. Each terminal 2, 3 comprises a pair of opposite cup-shape elements 18 and 19 fixed with their open ends together by means of a deformable sleeve 20 which, for example, is swaged onto them, and sealingly clamp between them a resiliently deformable diaphragm 21, for example of rubber; the chambers 4 which, like the interior of the tube 9, are entirely filled with the fluid 14, are defined by the cup-shaped elements 19, which integrally carry the nipples 15, and by facing parts of the elements 18, which are covered by the diaphragmswhich are covered 21 which define, with respect to the tube 9, the said movable end walls 5 of the chambers 4.

Each outer connector element 8 comprises a respective rigid rod 25, preferably of metal, carried by a corresponding piston 26 of plastics material mounted so as to be axially slidable within the respective terminal 2 or 3 in a seating 27 of the corresponding element 18, and a respective attachment ear 28 preferably screwed on an end 29 of the rod 25; the pistons 26 are further provided with respective end walls 30 to which the corresponding diaphragmss 21 of the terminals 2 and 3 are mechanically fixed through the rods 25, for example, by means of through holes 31 and associated threaded couplings 32 able to clamp the diaphragms 21 between the walls 30 and respective plates 33 facing these and rigidly carried by the corresponding ends of the rods 25 opposite the ends 29.

According to the invention, the device 1 further includes a Bowden mechanism 40 of known type housed within the tube 9 and immersed in the fluid 14, which mechanism mechanically connects together the connector elements 8 of the terminals 2 and 3; in particular, the mechanism 40 comprises a flexible sheath 41 formed by a wire 42 closely wound in a spiral and housed with play in the tube 9 in such a way as to remain held under pressure between the nipples 15 of the terminals 2 and 3 and is completely immersed in the fluid 14, and a flexible cable 43, preferably of metal, also entirely immersed for the whole of its length in the fluid 14 and movably housed with a small amount of play within the sheath 41; the opposite ends of the cable 43 extend out from the sheath 41 through both the chambers 4 of the terminals 2 and 3 and are fixed rigidly to the ends of the rods 25, opposite the ends 29, through the plates 33 to which the cable 43 is preferably soldered or knotted; in this way the cable 43 is rigidly connected at its opposite ends to the connector elements 8 so that it is able to translate within the interior of the sheath 41 together with these.

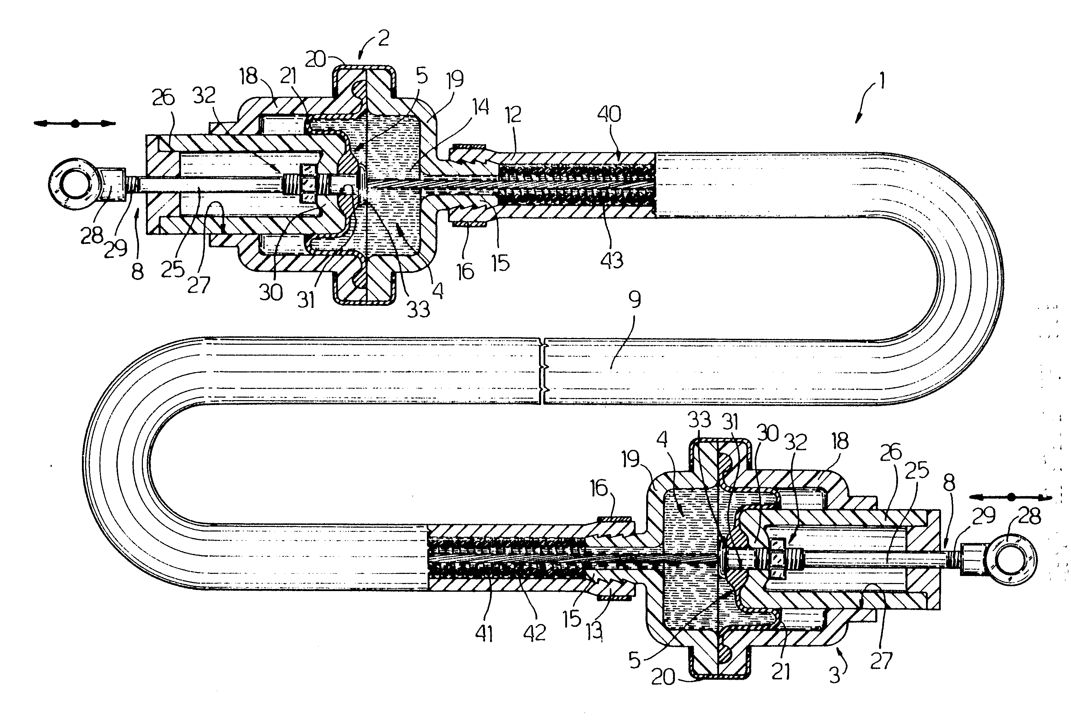

In use, supposing that the terminal 2 is connected with the element 8 fixed to the said known control device (not illustrated) and that the terminal 3 is connected with the element 8 fixed to the said device to be controlled, it is possible to transmit to the device to be controlled both thrust and traction in such a way as to make the element 8 of the terminal 3 reproduce both in amplitide and in direction all the movements imparted by the said control device (not illustrated) to the element 8 of the terminal 2 regardless of the manner in which the terminals 2 and 3 are disposed and however tortuous the path along which the tube 9 is disposed. To translate the element 8 of the terminal 3 towards the right of the drawing a thrust is exerted on the rod 25 of the terminal 2 the said control device (not illustrated) or directly by manual action on the element 8, causing translation thereof towards the right together with the associated piston 26; this action reduces the volume of the chamber 4 of the terminal 2 and therefore produces, the fluid 14 being incompressible, transfer of fluid 14 expelled from the chamber 4 of the terminal 2 because of the reduction of the volume thereof, into the tube 9 and, along this, into the chamber 4 of the terminal 3 which consequently increases in volume producing displacement towards the right of the membrane 21 and, with this, of the piston 26 and the associated rod 25 of the terminal 3, thus causing the desired displacement of the element 8 thereof. During this operation there is no risk of jamming of the cable 43 in that this is drawn by the advancement of the piston 26 of the terminal 3 thus compensating the thrust which it receives as a consequence of the displacement of the piston 26 of the terminal 2. To translate the element 8 of the terminal 3 in the opposite sense, that is, towards the left, a tension is exerted manually or by means of the said control device (not illustrated) towards the left on the rod 25 of the terminal 2; this causes displacement of the piston 26 with a consequent increase in the volume of the chamber 4 of the terminal 2 and puts the cable 43 under tension. Therefore the piston 26 of the terminal 3 is drawn by the cable 43 to move towards the left reducing the volume of the chamber 4 of the terminal 3 by an amount equal to the increase in volume of the chamber 4 of the terminal 2, and causes the desired displacedment towards the left of the element 8 of the terminal 3.

From what has been described the advantages connected with the flexible transmission device of the invention will be apparent; it is evident, in fact, that the Bowden mechanism 40 being lodged within the tube 9 there is no increase in size with respect to known hydraulic flexible devices and there is substantially no diminution in the total flexiblity of the Bowden mechanism/hydraulic tube assembly with respect to the individual component elements taken alone, in that the most rigid element (the Bowden mechanism) is disposed close to the axis, that is to say in a region where the contribution to the flexional rigidity is less; notwithstanding this the device of the invention is able to transmit both axial thrust (through the hydraulic part) and axial tension (through the mechanical part) and therefore permits displacements in any direction to be transmitted with a reduced bulk and low cost, in that supplementary rocker devices are not necessary. Finally, the transmission which is obtained is highly reliable in that the hydraulic pressure present within the tube 9 prevents any jamming of the cable 43.

## Claims

1. A flexible transmission device, particulary for control devices, of the type comprising a pair of terminals each of which defines an internal chamber of variable volume closed in a fluid-tight manner by a movable wall rigidly connected to an external connector element, a flexible tube closed in a fluid-tight manner at its opposite ends by the said terminals and hydraulically connecting the said variable volume chambers thereof and a substantially incompressible fluid sealed within the volume defined by the said chambers and the interior of the said tube, characterised in that it further includes a Bowden mechanism housed within the said tube and mechanically connecting the said external connector elements of the said pair of terminals.

2. A device according to Claim 1, characterised in that the said Bowden mechanism comprises a flexible sheath formed by a tightly wound spiral of wire and housed with play within the said tube, the said sheath being immersed in the said substantially incompressible fluid and being fixed between the said terminals, and a flexible movable cable housed with play within the interior of the said sheath with its opposite ends extending out from this through the said variable volume chambers of the terminals, the said flexible cable being entirely immersed in the said substantially incompressible fluid and carrying the said external connector elements fixed rigidly to its opposite ends.

3. A device according to Claim 2, characterised in that the said external connector elements comprise respective rigid rods carried rigidly by respective pistons axially slidable within the said terminals, respective corresponding ends of the rods being secured to the ends of the said flexible cable, and the opposite ends of the rods carrying, screwed thereto, respective attachment ears.

4. A device according to Claim 3, characterised in that the said movable wall of each of the said variable volume chambers is defined by a diaphragm mechanically fixed, by the rod of the associated external connector element of the corresponding terminal, to an end wall of the said piston housed slidably within this latter.

5. A device according to Claim 4, characterised by the fact that each said terminal includes a pair of opposite cup-shape elements fixed together with their open ends facing one another and clamping a respective said diaphragm between them in a fluid-tight manner, a first of the cup-shape elements carrying one end of the said flexible tube fitted in a fluid-tight manner onto its attachment nipple and a second of the said elements slidably carrying the said piston of the terminal.